Europäisches Patentamt

European Patent Office

Office européen des brevets

(11) Numéro de publication : **0 328 430 B1**

(19)

(12) FASCICULE DE BREVET EUROPEEN

(45) Date de publication du fascicule du brevet :
15.04.92 Bulletin 92/16

(51) Int. Cl.⁵ : **B60H 1/00**

(21) Numéro de dépôt : **89400226.0**

(22) Date de dépôt : **27.01.89**

(54) **Montage simplifié pour appareil d'aération, de chauffage et/ou de climatisation de véhicule automobile.**

(30) Priorité : **09.02.88 FR 8801497**

(43) Date de publication de la demande :
**16.08.89 Bulletin 89/33**

(45) Mention de la délivrance du brevet :
**15.04.92 Bulletin 92/16**

(84) Etats contractants désignés :
**DE GB IT**

(56) Documents cités :
**DE-B- 1 284 317**
**FR-A- 2 093 109**
**PATENT ABSTRACTS OF JAPAN, vol. 10, no.
55 (M-458)[2112], 5 mars 1986; & JP-A-60 203
521 (NISSAN JIDOSHA K.K.) 15-10-1985**
**PATENT ABSTRACTS OF JAPAN, vol. 11, no.
25 (M-556)[2472], 23 janvier 1987; & JP-A-61
196 817 (NISSAN MOTOR CO. LTD) 01-09-1986**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Boboeuf, Marc
23, rue de Villiers
F-92200 Neuilly s/Seine (FR)**

(74) Mandataire : **Seytre, Françoise
Peugeot S.A. Propriété Industrielle 18, rue des
Fauvelles
F-92250 La Garenne-Colombes (FR)**

## Description

L'invention concerne un appareil d'aération, de chauffage et/ou de climatisation installé dans un véhicule automobile comportant un conduit d'amenée de l'air extérieur débouchant dans le caisson d'auvent, tel que défini dans le préambule de la revendication 1 et connu par exemple de DE-B-1284317. Dans les appareils de ce type, l'ouverture faisant communiquer le caisson d'auvent, dans lequel circule l'air extérieur, et le conduit d'amenée est munie d'une collerette, installée dans le caisson, destinée à améliorer l'écoulement du fluide. En outre, un système d'étanchéité est souvent nécessaire si l'on veut empêcher l'eau de pluie ou de lavage qui ruisselle sur les parois du caisson d'auvent de pénétrer à l'intérieur de l'habitacle et du système d'aération. De même, un isolant phonique formé d'un matériau en nappe découpé doit être maintenu en place autour de l'ouverture, du côté de l'habitacle.

Pour simplifier cette opération on a déjà proposé (brevet DE-B-1 284 317) l'utilisation d'une collerette solidaire du conduit d'amenée d'air et de diamètre maximum inférieur au diamètre de l'ouverture ménagée pour la recevoir dans le caisson d'auvent, de sorte que l'ensemble formé par la collerette et le conduit peut être introduit en une seule opération, par l'habitacle, sans que la dimension de l'ouverture fasse obstacle au passage du bord évasé de la collerette.

Toutefois, il est nécessaire, dans ce cas, de prévoir un dispositif d'étanchéité occupant l'espace existant entre l'ouverture du caisson et la paroi extérieure de la collerette, lequel peut être important si l'on veut conserver à cette dernière un évasement suffisamment prononcé. Le document précité ne montre ni ne décrit un tel dispositif.

A cet effet, l'invention propose donc un appareil d'aértion, de chauffage et/ou de climatisation installé dans un véhicule automobile, comportant un conduit d'amenée de l'air extérieur débouchant dans le caisson d'auvent, solidaire, d'une collerette favorisant l'écoulement de l'air contenu dans ledit caisson et de diamètre inférieur à celui de l'ouverture ménagée pour le recevoir dans le fond de celui-ci, dans lequel le conduit d'amenée d'air est pourvu d'un collet circulaire comportant au moins une nervure circulaire, sur laquelle est assujetti un joint d'étanchéité dont la partie active occupe l'espace formé entre la paroi extérieure de la collerette et le bord de l'ouverture du caisson d'auvent, l'un des éléments de ladite partie active étant constitué par un bourrelet tubulaire placé en compression entre, d'une part le collet et d'autre part le fond dudit caisson.

Selon d'autres caractéristiques de l'invention :
– Le joint d'étanchéité comporte une lèvre souple placé en appui contre le paroi extérieure de la collerette.

– Le collet du conduit d'amenée d'air comporte une seconde nervure concentrique à la nervure de support du joint d'étanchéité et le bourrelet dudit joint est contenu radialement entre ces deux nervures.
– La hauteur de la seconde nervure est égale à celle de l'espace séparant le collet du fond du caisson d'auvent.
– La collerette est venue de forme avec le conduit d'amenée d'air.

D'autres avantages et caractéristiques de l'invention apparaîtront à la lecture de la description qui va suivre pour la compréhension de laquelle on se reportera aux dessins annexés dans lesquels :
– la figure 1 est une vue en coupe du montage d'un appareil d'aération et de climatisation selon l'invetion.

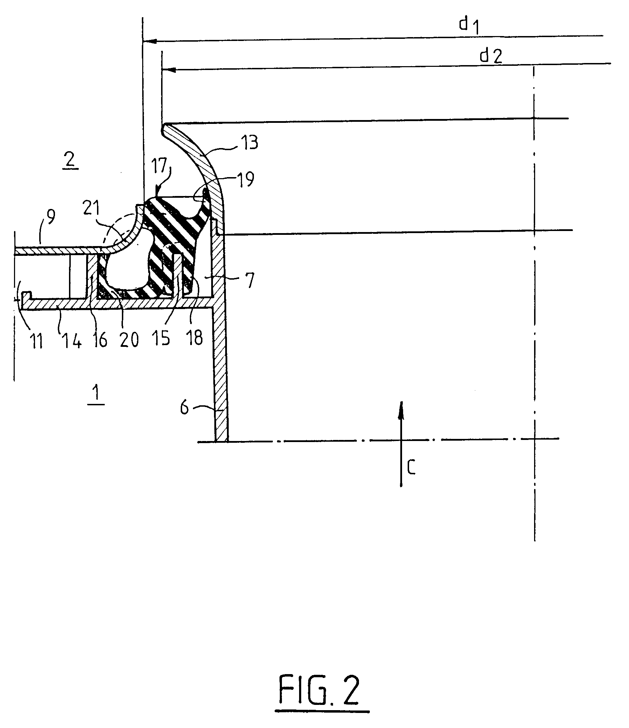

– La figure 2 est une vue en coupe partielle du montage d'un ensemble, selon l'invention.

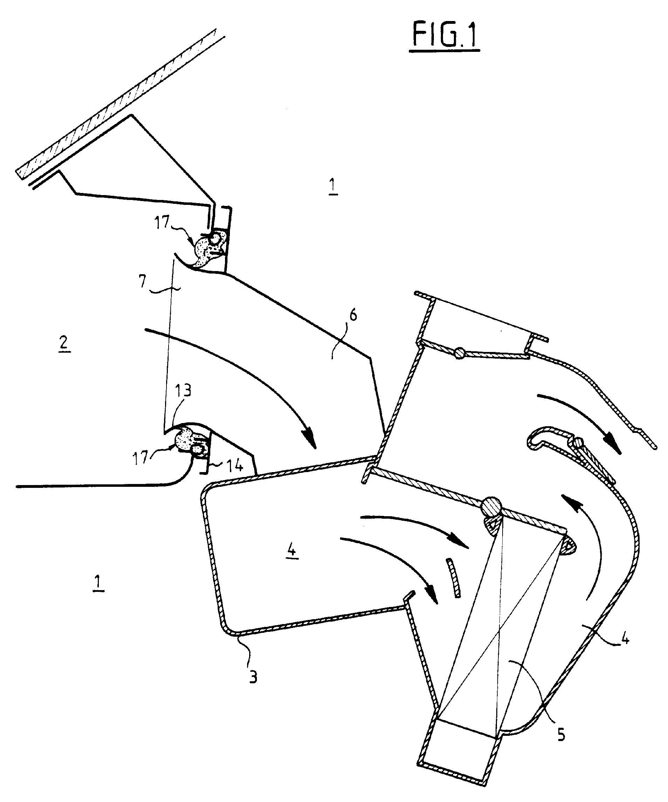

Un appareil d'aération, de chauffage et/ou de climatisation est représenté schématiquement, sur la figure 1, monté dans l'habitacle 1 d'un véhicule automobile, derrière le caisson d'auvent 2. Il comporte essentiellement une enveloppe 3 définissant un canal 4 de circulation d'air, dans lequel est disposé, par exemple, un aérotherme 5. Il est surmonté d'un conduit 6 d'amenée d'air, lequel débouche, à travers une ouverture 7, dans le caisson d'auvent 2. L'air extérieur est reçu dans le caisson d'auvent par une entrée (non représentée) ménagée dans la carrosserie.

La tôle 9 du caisson d'auvent 2 est pourvue d'une ouverture circulaire 7 dont le diamètre $d^1$ est supérieur au diamètre $d^2$ de la collerette 13, mesuré à son embouchure, c'est-à-dire à l'endroit de plus grand évasement. La collerette 13 est en outre rendue solidaire de l'extrémité du conduit 6, soit par emmanchement ou tout autre moyen, soit venue de forme avec ledit conduit. Celui-ci comporte encore un collet 14 sur lequel sont prévues des nervures circulaires concentriques 15 et 16. Un joint d'étanchéité circulaire 17 est pincé par sa partie 18, en forme d'étrier, sur la nervure 15. Il comporte une lèvre souple 19, placée en appui sur la paroi externe de la collerette 13, et un bourrelet tubulaire 20 contenu entre les nervures 15 et 16 et pressé sur la tôle 9 et le bord relevé 21 de l'ouverture 7. Les nervures 15 et 16 limitent l'expansion du bourrelet 20 vers l'habitacle, l'obligeant à remonter dans l'espace existant entre le bord 21 de l'ouverture 7 et la collerette 13 de façon à assurer une efficacité maximum de l'étanchéité, en coopération avec la lèvre souple 19. De plus, la nervure 16 sert d'entretoise pour réaliser l'appui du collet 14 sur la tôle 9.

Le montage d'un tel ensemble se fait très simplement : le joint 17 est assujetti sur la nervure 15 et l'appareil entièrement assemblé est mis en place du côté de l'habitacle (flèche C), la collerette 13 étant facilement introduite dans le caisson d'auvent puisque son diamètre maximum est inférieur à celui de l'ouverture ménagée dans le fond de celui-ci. Le joint d'étanchéité 17, prémonté, se place en compression sur le bord 21 de ladite ouverture et l'ensemble, qui intègre également des moyens de pincer l'isolant phonique 11 est ensuite maintenu en place par tout moyen approprié.

## Revendications

1. Appareil d'aération, de chauffage et/ou de climatisation installée dans un véhicule automobile, comportant un conduit d'amenée de l'air extérieur (6) débouchant dans le caisson d'auvent, solidaire d'une collerette (13) favorisant l'écoulement de l'air contenu dans ledit caisson et de diamètre inférieur à celui de l'ouverture (7) ménagée pour le recevoir dans le fond (9) de celui-ci, ledit conduit d'amenée d'air (6) étant pourvu d'un collet circulaire (14), caractérisé en ce que ledit collet circulaire (14) comporte au moins une nervure circulaire (15), sur laquelle est assujetti un joint d'étanchéité (17) dont la partie active (19,20) occupe l'espace formé entre la paroi extérieure de la collerette (13) et le bord de l'ouverture (7) du caisson d'auvent, l'un des éléments de ladite partie active étant constitué par un bourrelet tubulaire (20) placé en compression entre, d'une part le collet (14) et d'autre part le fond (9) dudit caisson.

2. Appareil selon la revendication 1, caractérisé en ce que le joint d'étanchéité (17) comporte une lèvre souple (19) placée en appui contre la paroi extérieure de la collerette (13).

3. Appareil selon la revendication 2, caractérisé en ce que le collet (14) du conduit d'amenée d'air (6) comporte une seconde nervure (16), concentrique à la nervure (15) de support du joint d'étanchéité et en ce que le bourrelet (20) dudit joint est contenu radialement entre ces deux nervures.

4. Appareil selon la revendication 3, caractérisé en ce que la hauteur de la nervure (16) est égale à celle de l'espace séparant le collet (14) du fond (9) du caisson d'auvent.

5. Appareil selon l'une des revendications précédentes, caractérisé en ce que la collerette (13) est venue de forme avec le conduit d'amenée d'air (6).

## Patentansprüche

1. Gerät zum Belüften, Heizen und/oder Klimatisieren, angeordnet in einem Kraftfahrzeug, mit einer Zuführleitung von Außenluft (6), die in den Kühlluftkasten mündet, verbunden mit einem Kragen (13), der das Strömen der in dem Kasten enthaltenen Luft erleichtert und mit einem Durchmesser, der geringer ist als jener der Öffnung (7), die ausgebildet ist, um ihn in seinem Boden (9) aufzunehmen, wobei die Luftzuführleitung (6) mit einem kreisförmigen Flansch (14) versehen ist, dadurch gekennzeichnet, daß der kreisförmige Flansch (14) wenigstens eine kreisförmige Rippe (15) aufweist, auf der ein Dichtungsteil (17) gut befestigt ist, dessen aktiver Bereich (19, 20) den Raum, der zwischen der Außenwand des Kragens (13) und dem Rand der Öffnung (7) des Luftkastens gebildet wird, besetzt, wobei eines der Elemente dieses Aktivbereichs durch eine rohrförmige Verdickung (20) gebildet wird, die unter Druck zwischen einerseits dem Flansch (14) und andererseits dem Boden (9) des Kastens angeordnet ist.

2. Gerät nach Anspruch 1, dadurch gekennzeichnet, daß das Dichtungsteil (17) eine weiche Lippe (19) aufweist, die in Andruck gegen die Außenwand des Kragens (13) angeordnet ist.

3. Gerät nach Anspruch 2, dadurch gekennzeichnet, daß der Flansch (14) der Luftzuführleitung (6) eine zweite Rippe (16) aufweist, die konzentrisch zur Rippe (15) der Stütze des Dichtungsteils ist, und daß die Verdickung (20) dieser Dichtung radial zwischen diesen beiden Rippen angeordnet ist.

4. Gerät nach Anspruch 3, dadurch gekennzeichnet, daß die Höhe der Rippe (16) gleich jener des Raumes ist, der den Flansch (14) vom Boden (9) des Luftkastens trennt.

5. Gerät nach einem der vorhergehenden Ansprüche, dadurch gekennzeichnet, daß der Kragen (13) mit der Luftzuführleitung (6) in Form gebracht ist.

## Claims

1. An apparatus for ventilation, heating and/or air-conditioning installed in a motor vehicle, comprising a pipe (6) for the supply of exterior air, opening out in the cowl case, integral with a flange (13) promoting the flow of the air contained in said case and having a diameter smaller than that of the opening (7) arranged to receive it in the bottom (9) thereof, said air supply pipe (6) being provided with a circular collar (14), characterised in that said circular collar (14) comprises at least one circular rib (15), on which is fixed a tightness joint (17), the active part (19,20) of which occupies the space formed between the exterior wall of the flange (13) and the edge of the opening (7) of the cowl case, one of the elements of said active part being constituted by a tubular bead (20) placed in compression between the collar (14) on the one hand and the bottom (9) of said case on the other hand.

2. An apparatus according to Claim 1, characterised in that the tightness joint (17) comprises a flexible lip (19) placed so as to rest against the exterior wall of the flange (13).

3. An apparatus according to Claim 2, characterised in that the collar (14) of the air supply pipe (6) comprises a second rib (16), concentric to the rib (15) for support of the tightness joint and in that the bead (20) of said joint is contained radially between said two ribs.

4. An apparatus according to Claim 3, characterised in that the height of the rib (16) is equal to that of the space separating the collar (14) of the bottom (9) of the cowl case.

5. An apparatus according to one of the preceding claims, characterised in that the flange (13) is formed in one piece with the air supyly pipe (6).

FIG.1

FIG. 2